# EUROPEAN PATENT SPECIFICATION

(11) **EP 3 932 164 B1**
(45) Date of publication and mention of the grant of the patent: **12.04.2023**
(21) Application number: 21181970.1
(22) Date of filing: 28.06.2021
(51) Int. Cl.: A01B 69/04, G05D 1/00, A01B 76/00

(54) **WORKING VEHICLE**
ARBEITSFAHRZEUG
ENGIN DE TRAVAIL

(30) Priority: 30.06.2020 JP 2020112879
(43) Date of publication of application: 05.01.2022
(73) Proprietor: Iseki & Co., Ltd., Matsuyama-shi, Ehime 799-2692 (JP)
(72) Inventor: KAJINO, Yutaka, Iyo-gun, 791-2193 (JP)
(74) Representative: TBK

(56) References cited:
- EP-A1- 3 351 078
- EP-A1- 3 352 036
- JP-A- 2004 008 053

## Description

### BACKGROUND OF THE INVENTION

### 1. Field of the Invention

The present invention relates to a working vehicle such as a cultivator.

### 2. Description of the Related Art

There is known a technique of: identifying the shape of an agricultural field by recording a traveling trajectory of a vehicle while causing the vehicle to perform manned traveling along an end of the agricultural field; setting a headland area along the shape of the agricultural field thus identified; setting a work route for unmanned traveling inside the headland area; and setting an end of the work route as a work end position (JP-A-2016-024541 (Patent Literature 1)).

However, the above technique is inconvenient because, since the work end position is located inside the end of the agricultural field by a distance equivalent to the headland area, after the unmanned traveling is over, an operator has to enter into the agricultural field quite deeply and walk down all the way to the parked working vehicle to get thereon.

The present invention has been made in view of the above problem, and aims to provide a working vehicle which enables an operator to get thereon without having to enter largely into the agricultural field.
Further background is disclosed in EP 3351078 A1 "Travel Route Generation Device".

### SUMMARY OF THE INVENTION

A first aspect of the present invention is a working vehicle including: a traveling body; a controller that is configured to cause the traveling body to travel autonomously along an autonomous work route set in an agricultural field; and a remote controller that is configured to send an instruction to the controller. While receiving a traveling instruction from the remote controller, the controller causes the traveling body to travel through remote control along a remote control traveling route previously set from an end stop position of the autonomous work route toward an end of the agricultural field.

A second aspect of the present invention is the working vehicle according to the first aspect of the present invention. At least an initial portion of a predetermined length of the remote control traveling route is on an extension line of the autonomous work route from the end stop position.

A third aspect of the present invention is the working vehicle according to the first aspect of the present invention. Once a leading end of the traveling body reaches the end of the agricultural field, the controller stops the remote control traveling of the traveling body even while receiving the traveling instruction from the remote controller.

A fourth aspect of the present invention is the working vehicle according to the first aspect of the present invention. At least a last portion of a predetermined length of the remote control traveling route is set parallel with a line of the end of the agricultural field toward which the traveling body goes.

A fifth aspect of the present invention is the working vehicle according to the fourth aspect of the present invention. Manual traveling is performed in a headland area; multiple planned headland traveling routes are set in the headland area; and the last portion of the predetermined length of the remote control traveling route is set, by a predetermined clearance, inside the outermost planned headland traveling route out of the multiple planned headland traveling routes.

A sixth aspect of the present invention is the working vehicle according to the first aspect of the present invention. A vehicle speed thereof on the remote control traveling route is limited to a predetermined speed or lower.

According to the first aspect of the present invention, since the traveling body moves to the end of the agricultural field, the operator can get on the traveling body without entering into the agricultural field quite deeply.

In addition, since the traveling body travels on the remote control traveling route previously set, no difficult manipulation such as steering is required during remote control.

Further, since the traveling body travels only while receiving the traveling instruction from the remote controller, it is possible to cause the traveling body to travel safely under monitoring by the operator.

According to the second aspect of the present invention, the orientation of the traveling body at the end stop position becomes identical with the orientation of the traveling body at the upcoming initial portion of the remote control traveling route. Thereby, remote control traveling can be started smoothly.

According to the third aspect of the present invention, it is possible to prevent the traveling body from deviating from the agricultural field due to the operator's error in manipulation of the remote controller.

According to the fourth aspect of the present invention, since the traveling body can stop along the line of the end of the agricultural field, the operator can get on the traveling body easily.

According to the fifth aspect of the present invention, since the traveling body might approach the end of the agricultural field too close if the last portion of the remote control traveling route is set on the outermost planned traveling route, this last portion is set inside the outermost planned traveling route by the predetermined clearance, thereby securing safety.

According to the sixth aspect of the present invention, it is possible to secure safety.

### BRIEF DESCRIPTION OF THE DRAWINGS

Fig. 1 is a side view of a working vehicle according to an embodiment of the present invention.
Fig. 2 is a block diagram of a controller of the working vehicle.
Fig. 3 is a plan view of a remote controller of the working vehicle.
Fig. 4 is a schematic plan view for explaining a traveling route of the working vehicle (Part 1).
Fig. 5 is a schematic plan view for explaining a traveling route of the working vehicle (Part 2).
Fig. 6 is a schematic plan view for explaining a traveling route of the working vehicle (Part 3).

### DESCRIPTION OF THE PREFERRED EMBODIMENTS

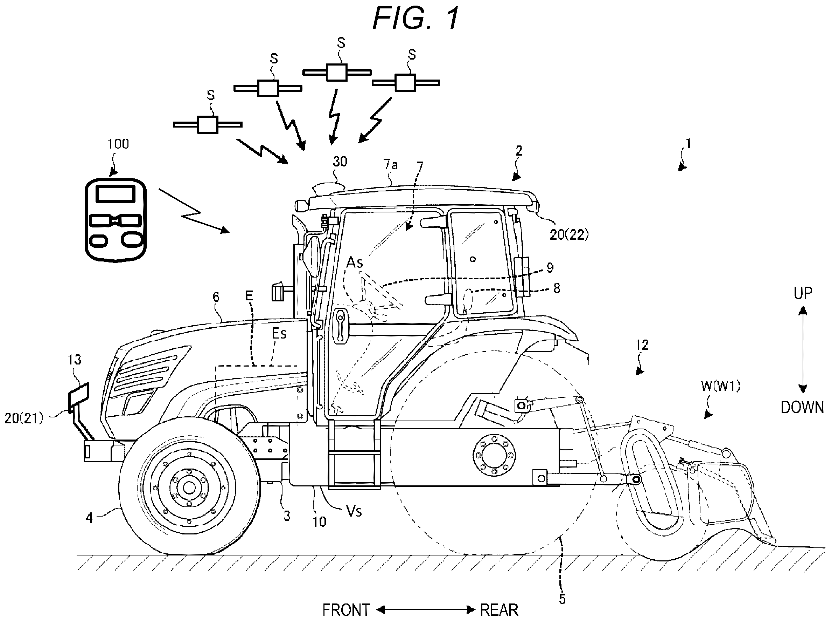

Hereinbelow, an embodiment of the present invention is described in detail with reference to the drawings. Fig. 1 is a side view of a tractor as an example of a working vehicle according to an embodiment of the present invention.

First, the overall configuration of a tractor 1 is described with reference to Fig. 1.

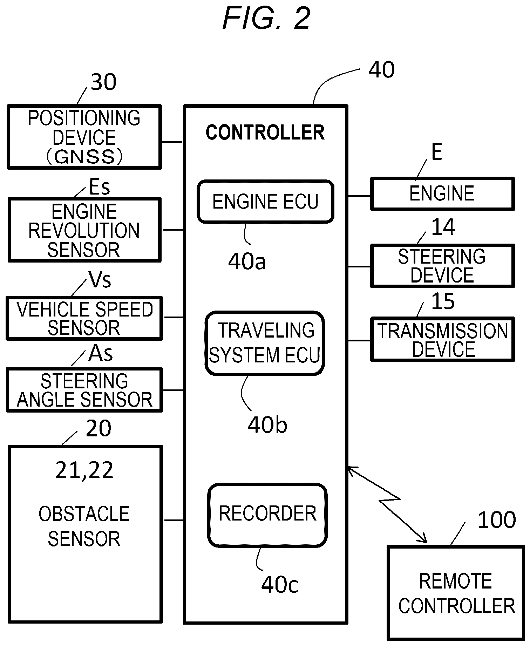

The tractor 1 being the working vehicle is an agricultural tractor which performs work, while traveling by itself, in a location such as an agricultural field. In addition, the tractor 1 performs predetermined work while traveling in an agricultural field with a driver (also referred to as an operator) on board, and also performs predetermined work while autonomously traveling in an agricultural field by means of control over each section by a control system mainly constituted of a controller 40 (see Fig. 2) to be described later.

Meanwhile, in the following description, a longitudinal direction indicates a direction in which the tractor 1 travels when traveling straight, and the forward side of the traveling direction is defined as "front" while the rearward side thereof is defined as "rear". The traveling direction of the tractor 1 indicates a direction going from a driver's seat 8 toward a steering wheel 9 to be described later when the tractor travels straight (see Fig. 1) .

A lateral direction indicates a direction horizontally orthogonal to the longitudinal direction. In the following description, left and right are defined with respect to the "front" side. Specifically, in a state in which the driver (also referred to as the "operator") of the tractor 1 is seated on the driver's seat 8 and directed forward, "left" indicates the left-hand side while "right" indicates the right-hand side.

An up-down direction indicates a vertical direction. The longitudinal direction, the lateral direction, and the up-down direction are orthogonal to each other. Note that, these directions are defined for the sake of convenience of description, and are not intended to limit the present invention. In addition, in the following description, the tractor 1 is sometimes referred to as a "machine body".

As illustrated in Fig. 1, the tractor 1 includes: a traveling body 2; and a working machine W. The traveling body 2 includes: a body frame 3; front wheels 4; rear wheels 5; a hood 6; an engine E; a manipulating section 7; and a transmission case 10. The body frame 3 is a main frame of the traveling body 2.

The front wheels 4 are provided in pairs on the left and right sides, and work mainly as wheels for steering (steering wheels). The rear wheels 5 are provided in pairs on the left and right sides, and work mainly as wheels for driving (driving wheels). The tractor 1 may be configured to be capable of switching between a two-wheel drive (2WD), in which the rear wheels 5 are driven, and a four-wheel drive (4WD) in which both the front wheels 4 and the rear wheels 5 are driven. In this case, both the front wheels 4 and the rear wheels 5 work as driving wheels. Note that, the traveling body 2 may include a crawler device instead of wheels (the front wheels 4 and the rear wheels 5). In this case, a traveling crawler works as a driving wheel.

The hood 6 is openably and closably provided in a front part of the traveling body 2. The hood 6 is capable of pivoting vertically (openable and closable) about its rear part. The hood 6 covers, in its closed state, the engine E which is mounted on the body frame 3. The engine E is a driving source of the tractor 1 and is a thermal engine such as a diesel engine and a gasoline engine.

The manipulating section 7 is provided in an upper part of the traveling body 2, and includes components such as: the driver's seat 8; and the steering wheel 9. The manipulating section 7 may be formed by being covered with a cabin 7a which is provided in the upper part of the traveling body 2. The driver's seat 8 is a seat for the driver. The steering wheel 9 is manipulated by the driver when the driver steers the front wheels 4. Note that, the manipulating section 7 includes a display (meter panel) for displaying various information thereon at a position ahead of the steering wheel 9.

In addition, the manipulating section 7 includes various manipulating levers such as a forward-backward travel lever, an accelerator lever, a main shift lever, and a sub-shift lever and various manipulating pedals such as an accelerator pedal, a brake pedal, and a clutch pedal.

The transmission case 10 houses a transmission (transmission device) 15. The transmission device 15 is configured to decelerate as appropriate power (rotational power) transmitted from the engine E and transmit the power to the rear wheels 5 as driving wheels and a PTO (Power Take-off) shaft.

The working machine W which is configured to perform work in an agricultural field is connected to a rear part of the traveling body 2, and the PTO shaft which is designed to transmit power for driving the working machine W protrudes rearward from the transmission case 10. The PTO shaft transmits rotational power, which has been decelerated as appropriate by the transmission, to the working machine W which is mounted on at least the rear part of the traveling body 2.

In addition, a lifting and lowering device 12 which is configured to lift and lower the working machine W is provided in the rear part of the traveling body 2. The lifting and lowering device 12 lifts the working machine W to move the working machine W to a non-working position. Meanwhile, the lifting and lowering device 12 lowers the working machine W to move the working machine W to a ground working position.

The working machine W is a machine for performing work in an agricultural field. In the example illustrated in Fig. 1, the working machine W is a rotary cultivator W1 which is configured to perform cultivating work in an agricultural field. The rotary cultivator W1 cultivates an agricultural field surface (soil) in such a way that a cultivating claw is rotated by power transmitted via the PTO shaft.

In addition, the tractor 1 includes a controller 40 as illustrated in Fig. 2. The controller 40 is configured to control the engine E (a reference sign 40a indicates an engine ECU), and control the traveling speed of the traveling body 2 (a reference sign 40b indicates a traveling system ECU). Besides, the controller 40 is configured to control the working machine W. A reference sign 40c indicates a recorder which is configured to record various data.

Further, the tractor 1 includes a positioning device 30. The positioning device 30 is provided in the upper part of the traveling body 2, and is configured to measure the position of the traveling body 2. The positioning device 30 is a GNSS (Global Navigation Satellite System), for example, and is capable of receiving radio waves from a navigation satellite S, which goes around up in the air, for positioning and time registering.

Furthermore, the tractor 1 includes an obstacle sensor 20. The obstacle sensor 20 includes: a front sensor 21; and a rear sensor 22. The front sensor 21 is disposed in the front part of the traveling body 2, e.g. mounted on a sensor mounting stay 13 which is provided ahead of the hood 6, and is configured to detect an object (obstacle) which exists ahead of the traveling body 2. The rear sensor 22 is disposed on the upper side of the rear part of the traveling body 2, e.g. mounted on an upper part of the cabin 7a, and is configured to detect an object (obstacle) which exists behind the traveling body 2.

Besides, both the front sensor 21 and the rear sensor 22 are a middle distance sensor, and preferably an infrared sensor. The infrared sensor is configured to emit an infrared beam and detect reflected light from an obstacle.

The front sensor 21 and the rear sensor 22 can detect the distance to an obstacle by measuring the time taken until the sensor detects reflected light from an obstacle after emitting an infrared beam. The front sensor 21 and the rear sensor 22 being an infrared sensor detect an obstacle two-dimensionally, and their detection range is about several meters to several tens of meters, for example. Note that, a middle distance sensor other than an infrared sensor can be used as the obstacle sensor 20. Examples of such a sensor include an ultrasonic sensor.

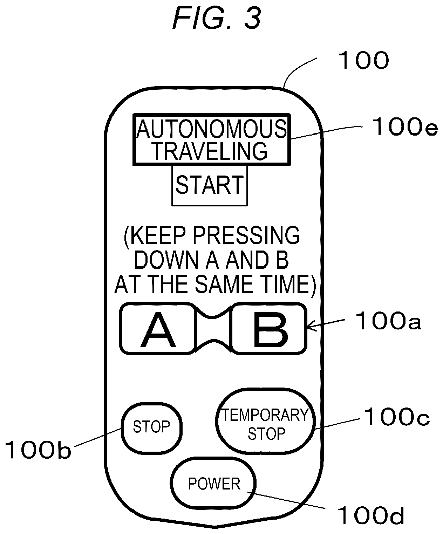

In addition, the tractor 1 is capable of remote control to be described later through manipulation of a remote controller 100 by the operator. Fig. 3 is a front view of the remote controller 100. In Fig. 3, a reference sign 100a indicates two push buttons "A" and "B". A reference sign 100b indicates a stop button, a reference sign 100c indicates a temporary stop button, a reference sign 100d indicates a power button, and a reference sign 100e indicates an automatic (autonomous) traveling instruction button.

Next, a description is given of how to cultivate an agricultural field with the above tractor 1.

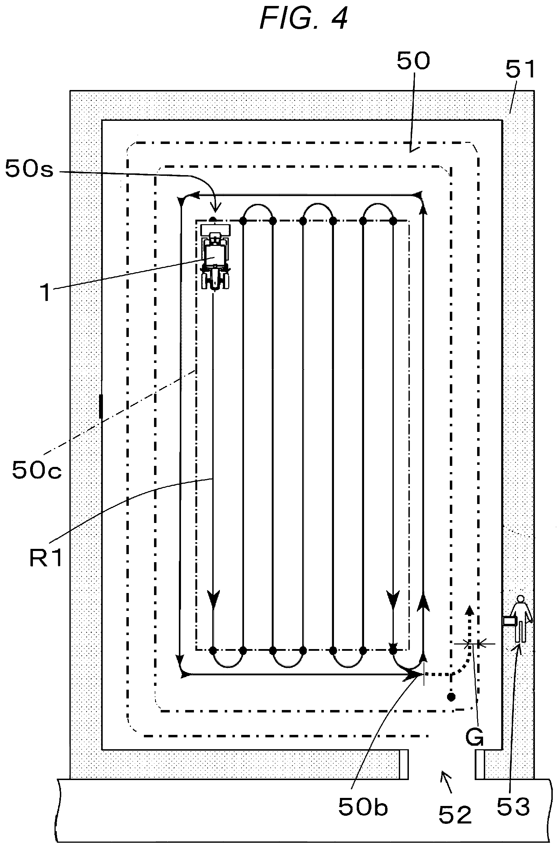

Fig. 4 is a schematic plan view illustrating a traveling state of the tractor 1 in an agricultural field. In Fig. 4, a reference sign 50 indicates an agricultural field, a reference sign 51 indicates a border of the agricultural field, a reference sign 52 indicates a gateway of the agricultural field 50, and a reference sign 53 indicates an operator.

The tractor 1 departs from a predetermined position 50s in a main range 50c located at substantially the center in the agricultural field 50. A reference sign R1 illustrated by a solid line herein indicates a predetermined route along which the tractor 1 travels in autonomous work mode. Specifically, this is a route such that the tractor reciprocates and pivots multiple times inside the above main range 50c, and finally goes around outside this range before stopping at a temporary stop position 50b. The operator 53 stands by at the border 51 near the temporary stop position 50b. Note that, the final round outside the range described above corresponds to a headland traveling route located on the innermost side of a headland area 50d to be described later.

The route described thus far is an autonomous work traveling route, and this route is recorded in advance in the recorder 40c of the controller 40. While checking a satellite signal received by the positioning device 30 against this previously recorded route data, the traveling system ECU 40b manipulates a steering device 14 and the transmission device 15 to cause the tractor 1 to travel in autonomous work mode.

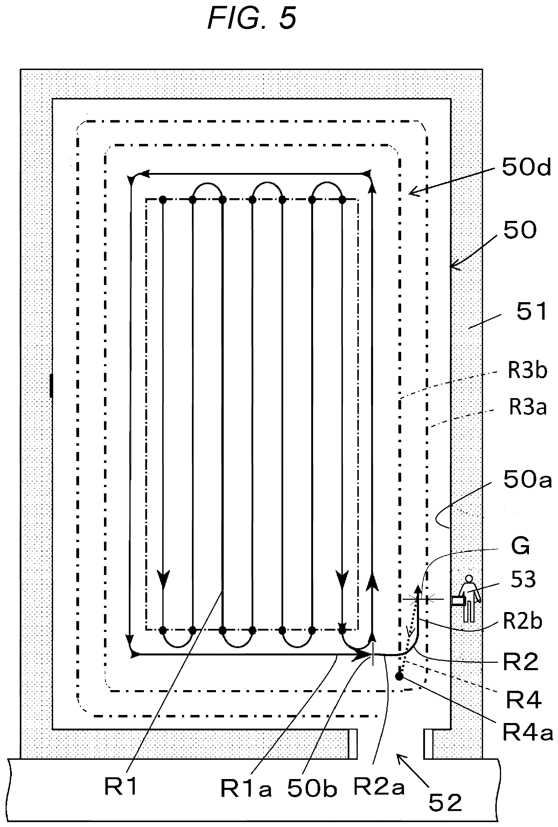

Next, for the tractor 1 stopping at the temporary stop position 50b, the operator 53 staying on the border 51 manipulates the remote controller 100 held by himself/herself in the following manner. Specifically, the operator 53 keeps pressing down start buttons A and B of the remote controller 100 at the same time. As a result, this signal is transmitted from the remote controller 100 to the controller 40, and the controller 40 manipulates the steering device 14 and the like via the traveling system ECU 40b so that the tractor 1 travels in automatic steering mode on a remote control traveling route illustrated by a reference sign R2 of Fig. 5. Note that, this remote control traveling route R2 is also recorded in advance in the recorder 40c of the controller 40.

This traveling of the tractor on the remote control traveling route R2 is kept as long as the operator 53 keeps pressing down the start buttons A and B of the remote controller 100. Accordingly, while visually checking the traveling situation of the tractor 1, the operator 53 releases his/her hand(s) from the buttons once judging that the tractor 1 has approached the border 51, whereby the tractor 1 stops traveling. Then, since the tractor 1 has come nearby, the operator 53 can get on the tractor directly without having to walk down deep into the agricultural field for getting thereon which would otherwise occur in existing vehicles. Thus, the operator can keep his/her feet from getting dirty, and does not need to prepare long boots for use in the agricultural field filled with water for soil plowing, for example. In addition, the operator 53 has only to pay attention to on/off of the start buttons A and B without having to judge the traveling trajectory of the tractor 1 and the like, and therefore remote control is easy.

Note that, with regard to the remote control traveling route R2 described above, it is preferable that at least an initial portion of a predetermined length of the remote control traveling route R2 be on an extension line of the autonomous work route R1 from the end stop position 50b. In other words, it is preferable to set the remote control traveling route R2 so that a preset initial portion R2a of the remote control traveling route R2 may be on a line obtained by directly extending a route portion R1a of the autonomous work route R1 located immediately before the stop position 50b. By doing so, the orientation of the tractor 1's body at the stop position 50b becomes identical with the orientation of the tractor 1's body at the upcoming initial portion of the remote control traveling route R2, whereby remote control traveling can be started smoothly.

Note that, although the tractor 1 is kept driven to travel on the remote control traveling route R2 as long as the operator 53 keeps pressing down the start buttons A and B of the remote controller 100, it is necessary to prevent the tractor 1 from approaching the border 51, i.e. an end 50a of the agricultural field 50 too close and colliding therewith due to carelessness of the operator 53. To deal with this, the controller 40 secures safety by stopping the remote control traveling of the traveling body 2 of the tractor 1 once a leading end of the traveling body 2 reaches the end 50a of the agricultural field 50 even while receiving a traveling instruction from the remote controller 100 (i.e. the start buttons A and B are kept pressed down). Needless to say, in this event, the map data of the agricultural field 50 previously recorded and the data received from the positioning device 30 are used.

Note that, in the case of the traveling on the remote control traveling route R2, the obstacle judging function using a GNSS (3 m in the case of the agricultural field area deviation judging function) that works on the autonomous work traveling route R1 is loosened (e.g. 3 m to 10 cm) or deactivated. This is because, otherwise, the tractor is unable to approach to within 3 m of the end 50a of the agricultural field 50 and therefore unable to stop beside a position where a person can get thereon easily.

In addition, it is preferable that the traveling speed of the tractor 1 on the remote control traveling route R2 be fixed to a predetermined speed or lower e.g. the first gear which is the lowest gear. Thereby, safety is secured. Alternatively, it is also preferable to regulate an upper limit in the change of engine revolutions. This is safe because it can prevent the tractor from moving faster than necessary. Note that, by changing the engine revolutions using a communication function with an information terminal which is an already equipped function, it is not necessary to add extra functions, which is cost-saving.

Further, in the automatic steering traveling on the remote control traveling route R2, if a received GNSS signal is disordered or reception of a GNSS signal becomes impossible, the controller 40 performs control so as to stop traveling even if the operator 53 keeps pressing down the start buttons A and B of the remote controller 100. This makes it possible to prevent the tractor from traveling in an unexpected direction, and secure safety even if the controller becomes unable to judge whether the tractor has deviated from the agricultural field area.

Besides, as illustrated in Fig. 5, it is preferable that at least a last portion R2b of a predetermined length of the remote control traveling route R2 be set parallel with the line of the end 50a of the agricultural field 50 toward which the traveling body goes. In other words, in the route R2b which is close to the final destination of the remote control traveling route R2, it is preferable that the traveling body 2 be directed in the same direction as the line of the end 50a of the agricultural field 50. Specifically, when getting on the driver's seat 8 of the traveling body 2, the operator 53 normally gets on and off from the left or right side of the traveling body 2. Thus, the traveling body 2 is designed to, so to say, stop beside the border 51 in order for the operator to get thereon easily.

Note that, irrespective of the setting of the remote control traveling route R2, it is preferable to stop forward movement of the traveling body 2 once the traveling body 2 becomes parallel with the line of the end 50a of the agricultural field 50 for the purpose of preventing needless and excess movement and securing safety.

Further, it is preferable that a distance G between the route R2b which is close to the final destination of the remote control traveling route and the line of the end 50a of the agricultural field 50 be set in the following manner. Specifically, for the manual traveling in the area other than the main range 50c located at substantially the center in the agricultural field 50 (i.e. the headland area 50d), multiple planned headland traveling routes R3a and R3b are assumed, that is, the outermost circumferential route R3a and the route R3b located inside the route R3a in the case of Fig. 5. In this case, the last portion R2b of the predetermined length of the remote control traveling route R2 is set, by a predetermined clearance G, inside the outermost planned headland traveling route R3a out of the two planned headland traveling routes R3a and R3b. This predetermined clearance G is 50 cm, for example.

By setting the last portion R2b of the predetermined length of the remote control traveling route R2 in this manner, it is possible to prevent a situation where, when the traveling body 2 stops beside the border 51, the traveling body 2 approaches the end 50a of the agricultural field 50 too close due to the too large width of the traveling body 2.

Note that, after the operator 53 causes the traveling body 2 to travel by keeping pressing down the start buttons A and B of the remote controller 100 as described above, once the traveling body stops, since then the traveling function is deactivated in any case even if the operator 53 keeps pressing down the start buttons A and B of the remote controller 100. This is because, by allowing the remote control traveling more than necessary, such traveling might be used at an unnecessary location and pose a danger.

In addition, after the autonomous work traveling on the autonomous work route R1 stops at the temporary stop position 50b once as described above, once a predetermined period of time passes, the traveling function is deactivated even if the operator 53 keeps pressing down the start buttons A and B of the remote controller 100. This is for avoiding a danger where, by allowing the remote control traveling more than necessary, the operator might touch the remote controller 100 and cause the traveling body to travel due to carelessness of the operator.

Besides, on the remote control traveling route R2, the traveling is naturally stopped if the obstacle sensor 20 (21, 22) detects an obstacle. Naturally, the traveling is not started also when the obstacle sensor detects an obstacle at the time of starting traveling. Note that, the detection range of the obstacle sensor 20 at this time is set narrower than the detection range used on the autonomous work route R1, e.g. set narrower only on the forward movement side and the right side. This is for avoiding a situation where, when the border 51 is high, the traveling body 2 might be unable to move to an area near the border 51. By doing so, the operator can get on the traveling body without stepping into the agricultural field 50 at all.

Additionally, it is also effective in terms of securing safety to sound a buzzer intermittently while the operator 53 keeps pressing down the start buttons A and B of the remote controller 100 to cause the traveling body to move forward.

Further, for securing safety, such a function of allowing the operator 53 to keep pressing down the start buttons A and B of the remote controller 100 to cause the traveling body to move forward is preferably deactivated once a door at the manipulating section 7 of the traveling body 2 is opened. Due to this, it is necessary to provide the door with a door switch.

Furthermore, such a function of allowing the operator 53 to keep pressing down the start buttons A and B of the remote controller 100 to cause the traveling body to move forward is activated only after the autonomous work traveling on the autonomous work route R1 stops at the temporary stop position 50b once. This is for preventing the forward movement function from working more than necessary and securing safety.

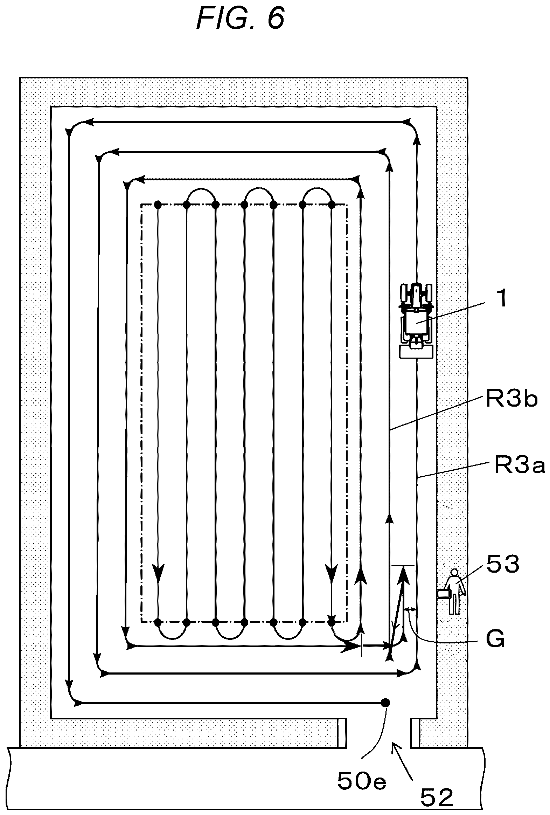

After the operator 53 gets on the traveling body 2 in the above manner, in the case of this embodiment, the operator 53 moves the traveling body 2 obliquely backward as illustrated by a backward movement route R4 (broken line) in Fig. 5, and stops the traveling body once when the traveling body reaches a position R4a which is along the planned headland traveling route R3b located on the inner side. Then, as illustrated in Fig. 6, the operator 53 manually causes the traveling body 2 to travel along the inner route R3b, then causes it to travel along the planned headland traveling route R3a located on the outermost circumferential side, and then stops the traveling body 2 at a stop position 50e located at the gateway 52.

According to the present invention, since the traveling body moves to the end of the agricultural field, the operator no longer has to enter deep into the agricultural field. Thus, the present invention is useful for tractors.

A challenge of the present invention is to enable an operator staying on a border to get on a tractor easily without having to enter deep into an agricultural field. A working vehicle includes: a controller 40 that is configured to cause a traveling body 2 to travel autonomously along an autonomous work route R1 set in an agricultural field 50; and a remote controller 100 that is configured to send an instruction to the controller 40, and is characterized in that, while receiving a traveling instruction from the remote controller 100, the controller 40 causes the traveling body 2 to travel through remote control along a remote control traveling route R2 previously set from an end stop position of the autonomous work route R1 toward an end 50a of the agricultural field 50.

## Claims

1. A working vehicle (1) comprising:
a traveling body (2); and
a controller (40) that is configured to cause the traveling body (2) to travel autonomously along an autonomous work route (R1) set in an agricultural field (50),
**characterized in that** the working vehicle (1) further comprises a remote controller (100) that is configured to send an instruction to the controller (40), wherein
while receiving a traveling instruction from the remote controller (100), the controller (40) causes the traveling body (2) to travel through remote control along a remote control traveling route (R2) previously set from an end stop position (50b) of the autonomous work route (R1) toward an end (50a) of the agricultural field (50).

2. The working vehicle (1) according to claim 1, wherein at least an initial portion of a predetermined length of the remote control traveling route (R2) is on an extension line of the autonomous work route (R1) from the end stop position (50b).

3. The working vehicle (1) according to claim 1, wherein, once a leading end of the traveling body (2) reaches the end (50a) of the agricultural field (50), the controller (40) stops the remote control traveling of the traveling body (2) even while receiving the traveling instruction from the remote controller (100).

4. The working vehicle (1) according to claim 1, wherein at least a last portion (R2b) of a predetermined length of the remote control traveling route (R2) is set parallel with a line of the end (50a) of the agricultural field (50) toward which the traveling body (2) goes.

5. The working vehicle (1) according to claim 4, wherein
manual traveling is performed in a headland area (50d),
a plurality of planned headland traveling routes (R3a, R3b) are set in the headland area (50d), and
the last portion (R2b) of the predetermined length of the remote control traveling route (R2) is set, by a predetermined clearance (G), inside the outermost planned headland traveling route out of the plurality of planned headland traveling routes (R3a, R3b).

6. The working vehicle (1) according to claim 1, wherein a vehicle speed thereof on the remote control traveling route (R2) is limited to a predetermined speed or lower.

## Patentansprüche

1. Arbeitsfahrzeug (1), umfassend:
einen Fahrkörper (2); und
eine Steuereinrichtung (40), die dazu eingerichtet ist, den Fahrkörper (2) zu veranlassen, sich autonom entlang einer autonomen Arbeitsroute (R1) zu bewegen, die in einem landwirtschaftlichen Feld (50) festgelegt ist,
**dadurch gekennzeichnet, dass** das Arbeitsfahrzeug (1) ferner eine Fernsteuereinrichtung (100) umfasst, die dazu eingerichtet ist, eine Anweisung an die Steuereinrichtung (40) zu senden, wobei
während des Empfangens einer Fahranweisung von der Fernsteuereinrichtung (100) die Steuereinrichtung (40) den Fahrkörper (2) veranlasst, durch Fernsteuerung entlang einer Fernsteuer-Fahrroute (R2) zu fahren, die zuvor von einer Endhalteposition (50b) der autonomen Arbeitsroute (R1) in Richtung eines Endes (50a) des landwirtschaftlichen Feldes (50) festgelegt wurde.

2. Arbeitsfahrzeug (1) nach Anspruch 1, wobei wenigstens ein Anfangsabschnitt einer vorbestimmten Länge der Fernsteuer-Fahrroute (R2) auf einer Verlängerungslinie der autonomen Arbeitsroute (R1) von der Endhalteposition (50b) liegt.

3. Arbeitsfahrzeug (1) nach Anspruch 1, wobei die Steuereinrichtung (40), sobald ein vorderes Ende des Fahrkörpers (2) das Ende (50a) des landwirtschaftlichen Feldes (50) erreicht, das ferngesteuerte Fahren des Fahrkörpers (2) stoppt, selbst während des Empfangens der Fahranweisung von der Fernsteuereinrichtung (100).

4. Arbeitsfahrzeug (1) nach Anspruch 1, wobei wenigstens ein Endabschnitt (R2b) einer vorbestimmten Länge der Fernsteuer-Fahrroute (R2) parallel zu einer Linie des Endes (50a) des landwirtschaftlichen Feldes festgelegt ist (50), auf das der Fahrkörper (2) zufährt.

5. Arbeitsfahrzeug (1) nach Anspruch 4, wobei
manuelles Fahren in einem Vorgewendebereich (50d) durchgeführt wird,
eine Vielzahl von geplanten Vorgewende-Fahrrouten (R3a, R3b) in dem Vorgewendebereich (50d) festgelegt sind, und
der Endabschnitt (R2b) der vorbestimmten Länge der Fernsteuer-Fahrroute (R2) um einen vorbestimmten Abstand (G) innerhalb der äußersten geplanten Vorgewende-Fahrroute aus der Vielzahl von geplanten Vorgewende-Fahrrouten (R3a, R3b) festgelegt ist.

6. Arbeitsfahrzeug (1) nach Anspruch 1, wobei dessen Fahrzeuggeschwindigkeit auf der Fernsteuer-Fahrroute (R2) auf eine vorbestimmte Geschwindigkeit oder niedriger begrenzt ist.

## Revendications

1. Engin de travail (1), comprenant :
un corps se déplaçant (2) ; et
une unité de commande (40) qui est configurée pour faire en sorte que le corps se déplaçant (2) se déplace de façon autonome le long d'un itinéraire de travail autonome (R1) établi dans un champ agricole (50),
**caractérisé en ce que** l'engin de travail (1) comprend en outre une unité de commande à distance (100) qui est configurée pour envoyer une instruction à l'unité de commande (40), dans lequel
lors de la réception d'une instruction de déplacement à partir de l'unité de commande à distance (100), l'unité de commande (40) fait en sorte que le corps se déplaçant (2) se déplace par le biais de commande à distance le long d'un itinéraire de déplacement par commande à distance (R2) établi auparavant depuis une position d'arrêt finale (50b) de l'itinéraire de travail autonome (R1) vers une limite (50a) du champ agricole (50).

2. Engin de travail (1) selon la revendication 1, dans lequel au moins une partie initiale d'une longueur prédéterminée de l'itinéraire de déplacement par commande à distance (R2) est sur une ligne d'extension de l'itinéraire de travail autonome (R1) depuis la position d'arrêt finale (50b).

3. Engin de travail (1) selon la revendication 1, dans lequel, une fois qu'une extrémité avant du corps se déplaçant (2) atteint la limite (50a) du champ agricole (50), l'unité de commande (40) arrête le déplacement par commande à distance du corps se déplaçant (2) même lors de la réception de l'instruction de déplacement à partir de l'unité de commande à distance (100).

4. Engin de travail (1) selon la revendication 1, dans lequel au moins une dernière partie (R2b) d'une longueur prédéterminée de l'itinéraire de déplacement par commande à distance (R2) est établie parallèlement à une ligne de la limite (50a) du champ agricole (50) vers laquelle le corps se déplaçant (2) va.

5. Engin de travail (1) selon la revendication 4, dans lequel
un déplacement manuel est réalisé dans une zone de tournière (50d),
une pluralité d'itinéraires planifiés de déplacement en tournière (R3a, R3b) sont établis dans la zone de tournière (50d), et
la dernière partie (R2b) de la longueur prédéterminée de l'itinéraire de déplacement par commande à distance (R2) est établie, par une zone de dégagement prédéterminée (G), à l'intérieur de l'itinéraire planifié extérieur de déplacement en tournière parmi la pluralité d'itinéraires planifiés de déplacement en tournière (R3a, R3b).

6. Engin de travail (1) selon la revendication 1, dans lequel une vitesse d'engin de celui-ci sur l'itinéraire de déplacement par commande à distance (R2) est limitée à une vitesse prédéterminée ou moins.
